(19) Europäisches Patentamt / European Patent Office / Office européen des brevets

(11) **EP 4 078 188 B1**

(12) **FASCICULE DE BREVET EUROPEEN**

(45) Date de publication et mention de la délivrance du brevet:
**28.02.2024 Bulletin 2024/09**

(21) Numéro de dépôt: **20820215.0**

(22) Date de dépôt: **10.12.2020**

(51) Classification Internationale des Brevets (IPC):
*G01P 15/13* *(2006.01)* *G01P 15/125* *(2006.01)*

(52) Classification Coopérative des Brevets (CPC):
**G01P 15/131; G01P 15/125**

(86) Numéro de dépôt international:
**PCT/EP2020/085564**

(87) Numéro de publication internationale:
**WO 2021/122320 (24.06.2021 Gazette 2021/25)**

(54) **CAPTEUR ACCÉLÉROMÉTRIQUE PENDULAIRE À DÉTECTION CAPACITIVE CONDITIONNELLE**

PENDELBESCHLEUNIGUNGSSENSOR MIT BEDINGTEM KAPAZITIVEN NACHWEIS

PENDULAR ACCELEROMETER SENSOR WITH CONDITIONAL CAPACITIVE DETECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2019 FR 1915319**

(43) Date de publication de la demande:
**26.10.2022 Bulletin 2022/43**

(73) Titulaire: **Safran Electronics & Defense**
**75015 Paris (FR)**

(72) Inventeurs:
• **ULLAH, Philippe**
**77550 MOISSY CRAMAYEL (FR)**
• **RAGOT, Vincent**
**77550 MOISSY-CRAMAYEL (FR)**
• **BIGOURIE, Nicolas**
**77550 MOISSY-CRAMAYEL (FR)**

(74) Mandataire: **Casalonga**
**Casalonga & Partners**
**Bayerstraße 71/73**
**80335 München (DE)**

(56) Documents cités:
**WO-A1-2014/128027 FR-A1- 2 916 855**

**Description**

La présente invention concerne un capteur à accéléromètre pendulaire boucle fermée à commande et détection électrostatique, servant à la détection de grandeurs physiques, et un procédé de commande d'un tel capteur. Le capteur est par exemple un capteur de technologie MEMS (acronyme anglosaxon de Micro Electro Mechanical Systems).

Un accéléromètre pendulaire électrostatique comprend un boîtier et une masse sismique reliée au boîtier par une ou plusieurs charnières positionnées de telle manière que la masse sismique forme un pendule mobile par rapport au boîtier, soit en translation, soit en rotation. Les déplacements de la masse sismique sous l'effet de l'accélération sont généralement détectés au moyen de trois électrodes.

Une première électrode fixe et une deuxième électrode fixe sont solidaires du boîtier et reliées à un circuit d'excitation.

La troisième électrode, mobile, est portée par le pendule et reliée à un circuit de détection.

Chaque électrode fixe forme avec l'électrode mobile une capacité dont la valeur dépend de leur écartement. En l'absence de défaut de réalisation et lorsque le capteur n'est pas soumis à une accélération suivant son axe sensible, le pendule demeure dans sa position neutre dans laquelle les deux capacités sont égales. En revanche, lorsque le pendule est soumis à une accélération suivant son axe sensible, il se déplace, provoquant une diminution consécutive de la capacité formée par l'électrode mobile et l'une des électrodes fixes, et une augmentation de la capacité formée par l'électrode mobile et l'autre électrode fixe.

Cette variation des capacités dépend également des déformations du boîtier et du pendule.

Dans un fonctionnement en boucle fermée, la position du pendule est asservie dans une position neutre, ou position de consigne, à mi-distance entre les électrodes fixes, en appliquant au pendule une force électrostatique qui doit compenser l'accélération appliquée selon l'axe sensible. La force électrostatique est le résultat de tensions appliquées aux électrodes pour maintenir à zéro la différence des capacités.

Le capteur comprend un circuit d'excitation pour chaque électrode fixe, agencé pour alimenter les électrodes de manière à engendrer ladite force électrostatique.

Le caractère quadratique de la force électrostatique vis-à-vis des tensions appliquées complique la conception du circuit de commande réalisant l'asservissement du pendule et l'estimation de l'accélération.

Pour contourner cette difficulté, il est connu de commander le pendule en tout ou rien à l'aide d'impulsions de tension calibrées.

Ces impulsions sont appliquées à l'une ou l'autre des électrodes selon qu'il s'agit de tirer ou de pousser le pendule pour le ramener vers sa position de consigne. La densité d'impulsions destinées à pousser, respectivement à tirer le pendule, c'est-à-dire la quantité d'impulsions par intervalle de temps, est alors une fonction affine de l'accélération à mesurer.

Ainsi, une accélération nulle est compensée par un nombre égal, en moyenne, d'impulsions dans les deux sens.

Toutefois, la symétrie des impulsions appliquées aux deux électrodes peut être imparfaite en raison d'une différence entre la durée des impulsions appliquées à la première électrode fixe et la durée des impulsions appliquées à la deuxième électrode fixe.

Dans ce cas, la densité d'impulsions est modifiée par l'asservissement pour maintenir le pendule en position de consigne, ce qui biaise l'estimation de l'accélération.

Afin d'améliorer les performances de ce type de capteur, il a été proposé, dans le document WO 2014/128027, d'utiliser un circuit d'excitation commun limitant ainsi les problèmes de dissymétrie de fabrication et de vieillissement de l'électronique du circuit d'excitation.

Il a également été proposé, dans le document WO 2017/85142, de mettre en oeuvre une phase de commande fine pour envoyer des impulsions de commande modérée permettant d'obtenir des performances optimales sur une gamme de mesures réduite, et une phase de commande de fonctionnement étendue, dans laquelle des impulsions de commande de forte amplitude sont envoyées pour étendre la plage de mesures, pour solliciter le capteur à pleine échelle, avec une performance éventuellement dégradée.

Bien qu'avantageux à maints égards, les capteurs précités présentent une consommation électrique relativement importante.

Au vu de ce qui précède, le but de l'invention est de proposer un capteur à accéléromètre pendulaire électrostatique ayant une consommation électrique réduite, tout en conservant des performances améliorées.

Un autre but de l'invention est par ailleurs de proposer un tel capteur ayant une structure de mise en oeuvre simple.

L'invention propose ainsi un capteur accélérométrique, comprenant un boîtier, un pendule fixé au boîtier, une électrode mobile portée par le pendule et reliée à un circuit de détection, une première électrode et une deuxième électrode fixes solidaires du boîtier pour former avec l'électrode mobile deux condensateurs de capacité variable en fonction d'une distance entre les électrodes, et une unité de commande configurée pour réaliser des opérations de détection pour mesurer les capacités variables des condensateurs et une opération de commande de l'électrode mobile en fonction des capacités mesurées en appliquant un signal logique de pilotage d'un commutateur de raccordement sélectif des électrodes fixes à un circuit d'excitation délivrant un signal de commande aux électrodes fixes pour maintenir le pendule dans une position prédéterminée.

L'unité de commande est configurée pour appliquer, à chaque période d'échantillonnage, un premier signal de détection à l'une desdites électrodes fixes choisie selon le niveau logique du signal de pilotage et un deuxième signal de détection à l'autre électrode fixe, le signal de commande étant appliqué à l'électrode à laquelle est appliqué le deuxième signal de détection.

Ainsi, la réduction de la consommation du capteur et l'amélioration des performances sont obtenues en réduisant le nombre de commutations du commutateur, en appliquant deux signaux de détection et un signal de commande.

Selon une autre caractéristique, les premier et deuxième signaux de détection sont des signaux en forme de créneau.

Selon encore une autre caractéristique, le commutateur comprend une première borne d'entrée à un potentiel de référence fourni par le circuit d'excitation et une deuxième borne d'entrée à un potentiel nul pour raccorder sélectivement lesdites électrodes fixes au circuit d'excitation ou au potentiel nul.

Dans un mode de réalisation, le circuit d'excitation comprend un convertisseur numérique analogique raccordé au commutateur et piloté par l'unité de commande.

Le circuit de détection peut comporter un étage amplificateur ayant une entrée reliée à l'électrode mobile et une sortie reliée à un convertisseur analogique numérique ayant une sortie raccordée à l'unité de commande.

Par exemple, l'unité de commande comporte un premier estimateur de position du pendule raccordé en entrée à la sortie du circuit de détection et une sortie raccordée à l'entrée négative d'un comparateur ayant une sortie reliée à une entrée d'un correcteur ayant une sortie reliée à un séquenceur et à un deuxième estimateur ayant une première sortie raccordée à l'entrée positive du comparateur et une deuxième sortie fournissant une estimée de l'accélération.

Dans un mode de réalisation, l'unité de commande est configurée pour appliquer le deuxième signal de détection et le signal de commande au moyen d'une impulsion de détection et de commande commune.

L'invention a également pour objet un procédé de commande d'un capteur accélérométrique tel que défini ci-dessus, comprenant les étapes de :

- détection des capacités variables des condensateurs en appliquant, à chaque période d'échantillonnage, un premier signal de détection à l'une des électrodes fixes choisie selon le niveau logique du signal de pilotage et un deuxième signal de détection à l'autre électrode fixe ;
- commande de l'électrode mobile en fonction des capacités mesurées en appliquant un signal logique de pilotage d'un commutateur de raccordement sélectif des électrodes fixes à un circuit d'excitation délivrant un signal de commande de manière à appliquer le signal de commande à l'électrode à laquelle est appliqué le deuxième signal de détection.

Selon ce procédé, le deuxième signal de détection et le signal de commande sont avantageusement appliqués au moyen d'une impulsion de détection et de commande commune.

D'autres buts, caractéristiques et avantages de l'invention apparaîtront à la lecture de la description suivante, donnée uniquement à titre d'exemple non limitatif, et faite en référence aux dessins annexés sur lesquels :

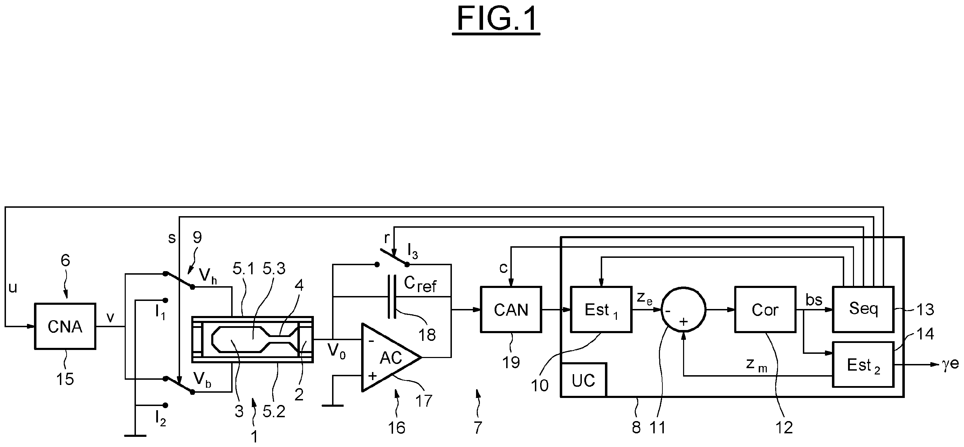

[Fig 1] est une vue schématique d'un capteur selon un mode de réalisation de l'invention ;
[Fig 2]
et
[Fig 3] sont des chronogrammes montrant l'application des premier et deuxième signaux de détection et du signal de commande aux électrodes fixes en fonction du niveau logique du signal de pilotage ; et
[Fig 4] est un chronogramme illustrant un autre mode de mise en oeuvre de l'invention dans lequel le signal de détection appliqué à l'électrode commandée et le signal de commande sont appliqués au moyen d'une impulsion de détection et de commande commune.

On a représenté sur la figure 1 un capteur accélérométrique conforme à l'invention, désigné par la référence numérique générale 1.

Le capteur accélérométrique est ici un microsystème électromécanique, aussi appelé MEMS, par gravure d'une plaque de matériau cristallin ou semi-cristallin, tel que du silicium.

Le capteur comprend un boîtier 2 auquel est articulé un corps massique 3 au moyen d'une charnière 4 positionnée de telle manière que le corps massique 3 forme un pendule mobile par rapport au boîtier 2 selon un mouvement de pivotement.

Le capteur 1 comprend une première électrode fixe 5.1 et une deuxième électrode fixe 5.2 qui sont solidaires du boîtier et qui sont reliées à un circuit d'excitation désigné par la référence 6, et une troisième électrode 5.3 portée par le corps massique 3 est reliée à un circuit de détection 7. Une unité de commande 8 est reliée au circuit d'excitation 6 et au circuit de détection 7.

Le circuit d'excitation 6 comporte une sortie raccordée à un commutateur 9 à deux positions reliées à la première électrode 5.1 et à la deuxième électrode 5.2 pour les raccorder sélectivement au circuit d'excitation 6.

Plus précisément, le commutateur 9 comprend un interrupteur I1 agencé pour relier la première électrode 5.1 soit à la sortie du circuit d'excitation 6 soit à la masse et un interrupteur I2 agencé pour relier la deuxième électrode 5.2 soit à la sortie du circuit d'excitation 6 soit à la masse.

Le commutateur 9 est piloté par l'unité de commande 8.

L'unité de commande 8 comprend un premier estimateur 10 relié en entrée au circuit de détection 7 et une sortie reliée à une entrée négative d'un comparateur 11 ayant une sortie reliée à une entrée d'un correcteur 12 dont la sortie est raccordée à un séquenceur 13.

L'unité de commande 8 comprend en outre un deuxième estimateur 14 ayant une entrée reliée à la sortie du correcteur 12, une sortie reliée à l'entrée additive du comparateur 11 et une sortie fournissant l'estimée de l'accélération ye.

Par ailleurs, le circuit d'excitation 6 comprend un convertisseur numérique analogique 15 raccordé au commutateur 9 et piloté par l'unité de commande 8.

Le circuit de détection 7 comprend un étage amplificateur principal 16 comportant un amplificateur de charge 17 équipé d'un condensateur de bouclage 18 de capacité Cref et d'un interrupteur $I_3$.

L'étage amplificateur a une entrée reliée à l'électrode mobile 5.3 et une sortie reliée à une entrée d'un convertisseur analogique numérique 19 ayant une sortie reliée au premier estimateur 10 de l'unité de commande.

Ce capteur fonctionne de la façon suivante.

L'unité de commande 8 gère le fonctionnement du capteur et en particulier la chronologie des diverses opérations échantillonnées à une fréquence FS. Le séquenceur 13 séquence les opérations à l'intérieur des périodes d'échantillonnage Ts, en pilotant de manière séquentielle et cyclique le convertisseur numérique analogique 15 par une commande u, les interrupteurs analogiques I1, I2 par une commande s, le convertisseur analogique numérique 19 par une commande c et l'interrupteur analogique I3 par une commande r.

Selon l'état logique de la commande s, l'une des électrodes 5.1, 5.2 est reliée à la sortie V du convertisseur numérique analogique 15 tandis que l'autre électrode 5.2, 5.1 est simultanément reliée à la masse. L'électrode reliée à la sortie du convertisseur est ainsi positionnée au potentiel de référence fourni par le circuit d'excitation 6.

Le capteur accélérométrique est commandé par l'unité de commande de manière à mettre en oeuvre, à chaque période d'échantillonnage TS, une phase de détection des capacités variables Ch et Cb formées entre la première électrode fixe 5.1 et l'électrode mobile 5.3 et entre la deuxième électrode fixe 5.2 et l'électrode mobile 5.3, respectivement, et une phase de commande dans laquelle un signal d'excitation est appliqué à l'une des électrodes fixes de manière à ramener le pendule dans sa position de consigne grâce à la force électrostatique s'appliquant sur les armatures du condensateur dont l'électrode fixe a été sélectionnée par la commande s.A l'issue de la phase de détection, le correcteur 10 détermine le signe d'un signal logique de pilotage *bs* afin de déterminer si le signal de commande *u* doit être appliqué à l'électrode fixe 5.1 ou à l'électrode fixe 5.2

Si bs=+1, la tension est appliquée à l'électrode 5.2 qui tire alors vers elle le pendule.

Si bs=-1, la tension est appliquée à l'électrode 5.1 qui tire alors vers elle le pendule.

La détection des capacités s'effectue de manière conditionnelle, suivant le signe du signal de pilotage bs, l'ordre chronologique des détections étant déterminé par le signe de *bs.*

L'expression linéarisée de la capacité de la première électrode fixe dite « haute » $C_h$ et de la deuxième électrode fixe dite « basse » $C_h$ est donnée par les relations suivantes :

$$C_h(z) = C_0 - C_1 \cdot \frac{z}{e}$$

$$(\text{éq. } 1)$$

$$C_b(z) = C_0 + C_1 \cdot \frac{z}{e}$$

$$(\text{éq. } 2)$$

Et la position relative du pendule est donnée par la relation :

$$\varepsilon_z = \frac{z}{e} = \frac{C_b - C_h}{2 \cdot C_1} = \frac{Q_b - Q_h}{2 \cdot C_1 \cdot V_{ref}}$$

$$(\text{éq. } 3)$$

dans lesquelles $C_0$ désigne la capacité initiale, Ci désigne la capacité active, z est la position du pendule, $e$ la largeur de l'entrefer, c'est-à-dire la distance entre les électrodes 5.1 et 5.3 ou entre les électrodes 5.2 et 5.3, qui sont égales au repos, $V_{ref}$ est la tension de référence fournie par le convertisseur analogique-numérique 15 et appliquée aux électrodes et $Q_b$ et $Q_h$ sont les charges transférées au circuit de détection 7, qui correspondent aux variations de charge aux bornes des capacités variables soumises à un front montant de tension allant de 0 à Vref.

Ainsi, pour chaque période d'échantillonnage, pendant la phase de détection, deux lectures capacitives sont mises en oeuvre pour estimer la position du pendule et alimenter le correcteur.

A l'intérieur d'une période d'échantillonnage, la position du pendule varie peu entre les deux mesures.

La détection des capacités variables est une détection conditionnelle, l'ordre de la détection capacitive étant conditionné au signe du signal logique de pilotage *bs* issu du correcteur 12. Il est donc effectué une permutation pseudo aléatoire de l'ordre des détections, la permutation étant pseudo-aléatoire en raison des propriétés du signal de pilotage *bs* dans une boucle de type sigma delta qui sont celles d'un bruit blanc filtré par une fonction de transfert passe-haut déterminée notamment par le correcteur 12.

La première détection est effectuée sur l'électrode non commandée, et la seconde est mise en oeuvre sur l'électrode qui va être commandée, le signal logique de pilotage étant disponible dès le début de la période temps réel car son calcul est lancé dès que les détections réalisées à la période d'échantillonnage précédente sont disponibles.

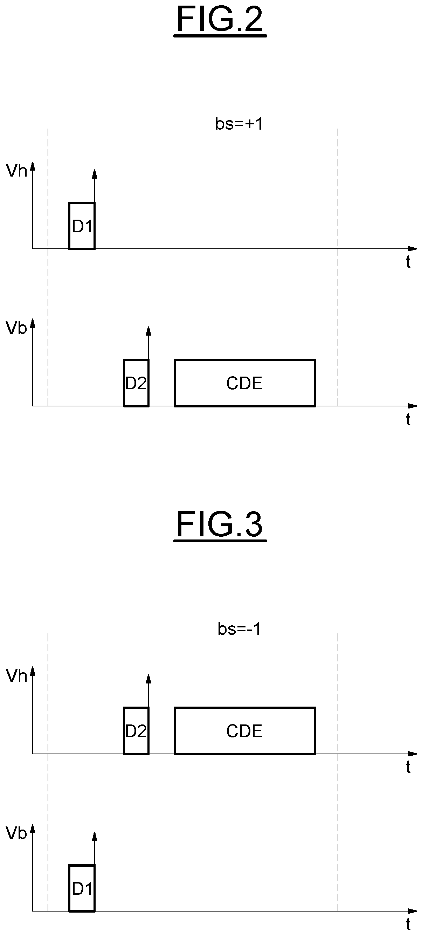

En référence à la figure 2, par exemple, lorsque bs = +1, une première détection D1 est mise en oeuvre pour l'électrode haute 5.1 par application d'une impulsion de lecture, puis une deuxième détection D2 est mise en oeuvre sur l'électrode basse par application d'une deuxième impulsion de mesure.

Une impulsion de commande est ensuite fournie à l'électrode basse Vb en pilotant le commutateur 9.

En référence à la figure 3, dans le cas où bs = -1, l'ordre de détection des impulsions est inversé.

Cette détection conditionnelle permet de limiter le nombre de commutations du commutateur 9 et par conséquent de réduire la consommation, la commande étant directement appliquée sur l'électrode à commander. En effet, il n'est plus nécessaire de manoeuvrer le commutateur 9 qui reste dans le même état entre la phase de détection D2 et la phase de commande.

On notera par ailleurs que l'ordre des détections est permuté à haute fréquence. Les biais d'origine électronique engendrés par les impulsions de commande sont ainsi transformés en bruits en raison de la nature pseudo aléatoire des commandes.

En effet, tout biais sur la détection génère un bruit d'allure spectrale identique à celle du signal impulsionnel de pilotage *bs.* Grâce à la détection conditionnelle, les biais sont fortement réduits, en étant multipliés par la valeur moyenne du signal de pilotage *bs,* seuls subsistant les bruits, pour lesquels les tolérances sont accrues.

Ainsi, la détection conditionnelle devient pseudo aléatoire tant pour la force parasite qu'elle exerce que pour la mesure de position elle-même.

Par ailleurs, alors que dans l'état de la technique les impulsions de détection étaient périodiques et leur spectre était constitué de raies, la permutation a un effet d'étalement spectral, ce qui permet de limiter l'excitation de modes parasites haute-fréquence et, surtout, de régulariser cette excitation par la commande, qui devient permanente et lentement variable ou, en d'autres termes, moins singulière en fréquence.

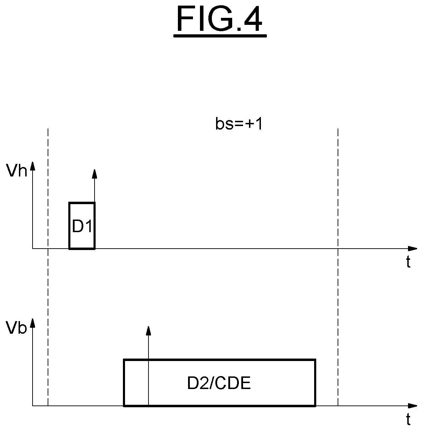

Par ailleurs, en référence à la figure 4, selon un autre aspect, la deuxième impulsion de détection capacitive et l'impulsion de commande forment une impulsion de détection et de commande commune.

En d'autres termes, le front montant du signal de commande est décalé de manière à coïncider avec le front descendant du deuxième signal de détection.

Ce mode de mise en oeuvre permet de réaliser la détection capacitive et la commande au moyen d'un même signal impulsionnel.

La force électrostatique appliquée au pendule, dont le sens est décidé par le signal de pilotage *bs* est constituée par la différence entre la force exercée par l'impulsion de détection et de commande et par le premier signal de détection appliqué sur l'autre électrode.

La détection s'effectue au moyen de la porteuse du signal de détection et de commande, tandis que la commande est réalisée en bande de base.

Ce mode de mise en oeuvre permet encore, théoriquement, de réduire la consommation d'un tiers, en réduisant les commutations du commutateur 9.

On obtient, de même, une réduction d'un tiers de l'erreur de biais due aux formes d'onde, qui dépend du nombre d'impulsions au cours de la période d'échantillonnage.

Enfin, l'erreur de facteur d'échelle due aux formes d'onde est entièrement supprimée.

En effet, l'accélération équivalente à la force appliquée s'écrit :

$$\bar{y} = \frac{C_1}{2 \cdot e \cdot m} \cdot (\sigma_b^2 - \sigma_h^2)$$

$$(\text{éq. } 4)$$

avec : $C_1$ la capacité active, e la largeur de l'entrefer, m la masse du pendule, et $\sigma h^2$ et $\sigma b^2$ le carré moyen des tensions appliquées aux électrodes haute et basse à chaque période d'échantillonnage.

Dans une mise en oeuvre à trois impulsions de détection et de commande, la force appliquée s'écrivait :

$$\bar{y} = \frac{C_1}{2 \cdot e \cdot m} \cdot \left( \sigma_{db}^2 - \sigma_{dh}^2 + \frac{\sigma_{cb}^2 - \sigma_{ch}^2}{2} + \frac{\sigma_{cb}^2 + \sigma_{ch}^2}{2} \cdot bs \right)$$

$$(\text{éq. } 5)$$

dans laquelle $\sigma_{db}^2 - \sigma_{dh}^2 + \frac{\sigma_{cb}^2 - \sigma_{ch}^2}{2}$ correspond au biais et $\frac{\sigma_{cb}^2 + \sigma_{ch}^2}{2}$ correspond au facteur d'échelle.

En mettant en oeuvre une première impulsion de détection et une deuxième impulsion de détection et de commande, la force appliquée s'écrit :

$$\bar{y} = \frac{C_1}{2 \cdot e \cdot m} \cdot \left( \frac{\sigma_{db}^2 - \sigma_{dh}^2 + \sigma_{cb}^2 - \sigma_{ch}^2}{2} + \frac{\sigma_{cb}^2 + \sigma_{ch}^2 - \sigma_{db}^2 - \sigma_{dh}^2}{2} \cdot bs \right)$$

$$(\text{éq. } 6)$$

En supposant que les constantes de temps sont courtes devant la durée des impulsions, un défaut de forme d'onde quelconque $\sigma err^2$ aura le même effet que ce soit sur une impulsion de détection ou une impulsion de commande, se superposant au carré moyen théorique.

En notant $\varepsilon_t$ la part dissymétrique de ce défaut, on a :

$$\sigma_{db}^2 = \sigma_{d,th}^2 + (1 + \varepsilon_t) \cdot \sigma_{err}^2$$

$$(\text{éq. } 7a)$$

$$\sigma_{dh}^2 = \sigma_{d,th}^2 + (1 - \varepsilon_t) \cdot \sigma_{err}^2$$

$$(\text{éq. } 7b)$$

$$\sigma_{cb}^2 = \sigma_{c,th}^2 + (1 - \varepsilon_t) \cdot \sigma_{err}^2$$

$$(\text{éq. } 7c)$$

$$\sigma_{ch}^2 = \sigma_{c,th}^2 + (1 - \varepsilon_t) \cdot \sigma_{err}^2$$

$$(\text{éq. } 7d)$$

Dans une mise en oeuvre à trois impulsions, on obtient :

$$\bar{y} = \frac{C_1}{2 \cdot e \cdot m} \cdot \left(3 \cdot \varepsilon_t \cdot \sigma_{err}^2 - \left(\sigma_{c,th}^2 + \sigma_{err}^2\right) \cdot bs\right)$$

$$(\text{éq. } 8)$$

dans laquelle $3 \cdot \varepsilon_t \cdot \sigma_{err}^2$ correspond au biais et $\left(\sigma_{c,th}^2 + \sigma_{err}^2\right)$ correspond au facteur d'échelle.

Avec une mise en oeuvre à deux impulsions, on a :

$$\bar{y} = \frac{C_1}{2 \cdot e \cdot m} \cdot \left(2 \cdot \varepsilon_t \cdot \sigma_{err}^2 + \left(\sigma_{c,th}^2 - \sigma_{d,th}^2\right) \cdot bs\right)$$

$$(\text{éq } 9)$$

dans laquelle $2 \cdot \varepsilon_t \cdot \sigma_{err}^2$ correspond au biais et $\left(\sigma_{c,th}^2 - \sigma_{d,th}^2\right)$ correspond au facteur d'échelle.

On voit donc que l'erreur causée par l'impulsion de commande est compensée par l'erreur causée par l'impulsion de détection.

L'erreur de facteur d'échelle est éliminée et ne doit plus être prise en compte lors de phases préalables de calibration et qui pouvait être significative à certaines températures de fonctionnement et lors du vieillissement du capteur.

## Revendications

1.  Capteur accélérométrique, comprenant un boîtier (2), un pendule (3) fixé au boîtier, une électrode mobile (5.3) portée par le pendule et reliée à un circuit de détection (7), une première électrode (5.1) et une deuxième électrode (5.2) fixes solidaires du boîtier pour former avec l'électrode mobile deux condensateurs de capacité variable en fonction d'une distance entre les électrodes, et une unité de commande (8) configurée pour réaliser des opérations de détection pour mesurer les capacités variables des condensateurs et une opération de commande de l'électrode mobile en fonction des capacités mesurées en appliquant un signal logique (*bs*) de pilotage d'un commutateur (9) de raccordement sélectif des électrodes fixes à un circuit d'excitation (6) délivrant un signal de commande (*u*) aux électrodes fixes pour maintenir le pendule dans une position prédéterminée, **caractérisé en ce que** l'unité de commande est configurée pour appliquer, pendant des périodes d'échantillonnage, un premier signal de détection à l'une desdites électrodes fixes choisie selon le niveau logique du signal de pilotage, et un deuxième signal de détection à l'autre électrode fixe, le signal de commande (*u*) étant appliqué à l'électrode à laquelle est appliqué le deuxième signal de détection.

2.  Capteur selon la revendication 1, dans lequel le premier et le deuxième signaux de détection sont des signaux en forme de créneau.

3.  Capteur selon l'une des revendications 1 et 2, dans lequel le commutateur (9) comprend une première borne d'entrée à un potentiel de référence fourni par le circuit d'excitation (6), et une deuxième borne d'entrée à un potentiel nul pour raccorder sélectivement lesdites électrodes au circuit d'excitation ou au potentiel nul.

4.  Capteur selon l'une quelconque des revendications 1 à 3, dans lequel le circuit d'excitation (6) comprend un convertisseur numérique analogique raccordé au commutateur (9) et piloté par l'unité de commande (8).

5.  Capteur selon l'une quelconque des revendications 1 à 4, dans lequel le circuit de détection (7) comporte un étage amplificateur ayant une entrée reliée à l'électrode mobile (5.3) et une sortie reliée à un convertisseur numérique analogique ayant une sortie raccordée à l'unité de commande.

6.  Capteur selon l'une quelconque des revendications 1 à 5, dans lequel l'unité de commande (8) comporte un premier estimateur (10) de position du pendule raccordé en entrée à la sortie du circuit de détection et une sortie raccordée à l'entrée négative d'un comparateur (11) ayant une sortie reliée à une entrée d'un correcteur (12) ayant une sortie reliée à un séquenceur (13) et à un deuxième estimateur (14) ayant une première sortie raccordée à l'entrée positive du comparateur et une deuxième sortie fournissant une estimée de l'accélération.

7. Capteur selon l'une des revendications 1 à 6, dans lequel l'unité de commande (8) est configurée pour appliquer le deuxième signal de détection et le signal de commande au moyen d'une impulsion de détection et de commande commune.

8. Procédé de commande d'un capteur accélérométrique selon l'une quelconque des revendications 1 à 7, **caractérisé en ce qu'**il comporte les étapes de :

- détection des capacités variables des condensateurs en appliquant à chaque période d'échantillonnage un premier signal de détection à l'une des électrodes fixes (5.1, 5.2) choisie selon le niveau logique du signal de pilotage et un deuxième signal de détection à l'autre électrode fixe ;
- commande de l'électrode mobile (5.1) en fonction des capacités mesurées en appliquant un signal logique de pilotage d'un commutateur (9) de raccordement sélectif des électrodes fixes à un circuit d'excitation (6) délivrant un signal de commande de manière à appliquer le signal de commande (u) à l'électrode à laquelle est appliqué le deuxième signal logique de détection.

9. Procédé selon la revendication 8, dans lequel le deuxième signal de détection et le signal de commande sont appliqués au moyen d'une impulsion de détection et de commande commune.

**Patentansprüche**

1. Beschleunigungssensor, ein Gehäuse (2) umfassend, ein Pendel (3), das am Gehäuse befestigt ist, eine bewegliche Elektrode (5.3), die vom Pendel getragen und mit einem Erfassungskreis (7) verbunden ist, eine erste Elektrode (5.1) und eine zweite Elektrode (5.2), die stationär sind, und fest am Gehäuse angebracht sind, um mit der beweglichen Elektrode zwei Kondensatoren zu bilden mit einer Kapazität, die variabel ist in Abhängigkeit von einem Abstand zwischen den Elektroden, und eine Steuereinheit (8), die konfiguriert ist, um Erfassungsvorgänge zum Messen der variablen Kondensatorkapazitäten durchzuführen, und einen Steuervorgang der beweglichen Elektrode in Abhängigkeit von den gemessenen Kapazitäten durch Anlegen eines Logiksignals (bs) zum Ansteuern eines Wechselschalters (9) zum selektiven Anschließen der stationären Elektroden an einen Erregerkreis (6), der den stationären Elektroden ein Steuersignal (*u*) bereitstellt, um das Pendel in einer vorbestimmten Position zu halten, **dadurch gekennzeichnet, dass** die Steuereinheit konfiguriert ist, um während den Abtastperioden ein erstes Erfassungssignal an eine der stationären Elektroden anzulegen, die ausgewählt ist gemäß der logischen Ebene des Ansteuerungssignals, und ein zweites Erfassungssignal an die andere stationäre Elektrode, wobei das Steuersignal (*u*) an diejenige Elektrode angelegt wird, an die das zweite Erfassungssignal angelegt wird.

2. Sensor nach Anspruch 1, wobei das erste und das zweite Erfassungssignal Signale mit Amplitudenform sind.

3. Sensor nach einem der Ansprüche 1 und 2, wobei der Wechselschalter (9) eine erste Eingangsklemme mit einem Referenzpotential umfasst, das vom Erregerkreis (6) geliefert wird, und eine zweite Eingangsklemme mit einem Nullpotential zum selektiven Anschließen der Elektroden an den Erregerkreis oder an das Nullpotential.

4. Sensor nach einem der Ansprüche 1 bis 3, wobei der Erregerkreis (6) einen Digital-Analog-Wandler umfasst, der an den Wechselschalter (9) angeschlossen ist, und von der Steuereinheit (8) angesteuert wird.

5. Sensor nach einem der Ansprüche 1 bis 4, wobei der Erfassungskreis (7) eine Verstärkerstufe beinhaltet, die einen Eingang aufweist, der mit der beweglichen Elektrode (5.3) verbunden ist, und einen Ausgang, der mit einem Digital-Analog-Wandler verbunden ist, der einen Ausgang aufweist, der an die Steuereinheit angeschlossen ist.

6. Sensor nach einem der Ansprüche 1 bis 5, wobei die Steuereinheit (8) einen ersten Schätzer (10) der Pendelposition beinhaltet, der als Eingang an den Ausgang des Erfassungskreises angeschlossen ist, und einen Ausgang, der an den negativen Eingang eines Komparators (11) angeschlossen ist, der einen Ausgang aufweist, der mit einem Eingang eines Korrektors (12) verbunden ist, der einen Ausgang aufweist, der mit einem Sequenzer (13) verbunden ist, und einen zweiten Schätzer (14), der einen ersten Ausgang aufweist, der an den positiven Eingang des Komparators angeschlossen ist, und einen zweiten Ausgang, der eine Beschleunigungsschätzung liefert.

7. Sensor nach einem der Ansprüche 1 bis 6, wobei die Steuereinheit (8) konfiguriert ist, um das zweite Erfassungssignal und das Steuersignal mittels eines gemeinsamen Erfassungs- und Steuerimpulses anzulegen.

8. Verfahren zum Steuern eines Beschleunigungssensors nach einem der Ansprüche 1 bis 7, **dadurch gekennzeichnet, dass** es die Schritte beinhaltet zum:

   - Erfassen variabler Kondensatorkapazitäten durch Anlegen, in jeder Abtastperiode, eines ersten Erfassungssignals an eine der stationären Elektroden (5.1, 5.2), die gemäß der logischen Ebene des Ansteuerungssignals ausgewählt sind, und eines zweiten Erfassungssignals an die andere stationäre Elektrode;
   - Steuern der beweglichen Elektrode (5.1) in Abhängigkeit von den gemessenen Kapazitäten, durch Anlegen eines Logiksignals zum Ansteuern eines Wechselschalters (9) zum selektiven Anschließen der stationären Elektroden an einen Erregerkreis (6), der ein Steuersignal bereitstellt, um das Steuersignal ($u$) an die Elektrode anzulegen, an die das zweite Logiksignal zur Erfassung angelegt ist.

9. Verfahren nach Anspruch 8, wobei das zweite Erfassungssignal und das Steuersignal mittels eines gemeinsamen Erfassungs- und Steuerimpulses angelegt werden.

**Claims**

1. An accelerometric sensor, comprising a housing (2), a pendulum (3) fixed to the housing, a movable electrode (5.3) carried by the pendulum and connected to a detection circuit (7), a first electrode (5.1) and a second electrode (5.2) which are fixed integral with the housing to form with the movable electrode two capacitors of variable capacity depending on a distance between the electrodes, and a control unit (8) configured to carry out detection operations to measure the variable capacities of the capacitors and a control operation of the movable electrode depending on the capacities measured by applying a logic signal (bs) for driving a switch (9) for selective connection of the fixed electrodes to an excitation circuit (6) delivering a control signal (u) to the fixed electrodes to maintain the pendulum in a predetermined position, **characterised in that** the control unit is configured to apply, during sampling periods, a first detection signal to one of said fixed electrodes chosen according to the logic level of the drive signal, and a second detection signal to the other fixed electrode, the control signal (u) being applied to the electrode to which the second detection signal is applied.

2. The sensor according to claim 1, wherein the first and second detection signals are slot-shaped signals.

3. The sensor according to one of claims 1 and 2, wherein the switch (9) comprises a first input terminal at a reference potential supplied by the excitation circuit (6), and a second input terminal at zero potential to selectively connect said electrodes to the excitation circuit or to zero potential.

4. The sensor according to any one of claims 1 to 3, wherein the excitation circuit (6) comprises a digital-to-analogue converter connected to the switch (9) and driven by the control unit (8).

5. The sensor according to any one of claims 1 to 4, wherein the detection circuit (7) includes an amplifier stage having an input connected to the movable electrode (5.3) and an output connected to a digital-to-analogue converter having an output connected to the control unit.

6. The sensor according to any one of claims 1 to 5, wherein the control unit (8) includes a first estimator (10) of the position of the pendulum connected at the input to the output of the detection circuit and an output connected to the negative input of a comparator (11) having an output connected to an input of a corrector (12) having an output connected to a sequencer (13) and to a second estimator (14) having a first output connected to the positive input of the comparator and a second output providing an estimate of the acceleration.

7. The sensor according to one of claims 1 to 6, wherein the control unit (8) is configured to apply the second detection signal and the control signal by means of a common detection and control pulse.

8. A method for controlling an accelerometric sensor according to any one of claims 1 to 7, **characterised in that** it includes the steps of:

   - detecting the variable capacitances of the capacitors by applying at each sampling period a first detection signal to one of the fixed electrodes (5.1, 5.2) chosen according to the logic level of the drive signal and a second detection signal to the other fixed electrode;

- controlling the movable electrode (5.1) depending on the capacities measured by applying a logic signal for driving a switch (9) for selective connection of the fixed electrodes to an excitation circuit (6) delivering a control signal so as to apply the control signal (u) to the electrode to which the second detection logic signal is applied.

9. The method according to claim 8, wherein the second detection signal and the control signal are applied by means of a common detection and control pulse.

# FIG.1

# FIG.2

bs=+1

Vh

D1

t

Vb

D2    CDE

t

# FIG.3

bs=-1

Vh

D2    CDE

t

Vb

D1

t

# FIG.4

bs=+1

Vh

D1

t

Vb

D2/CDE

t

**EP 4 078 188 B1**

## RÉFÉRENCES CITÉES DANS LA DESCRIPTION

**Documents brevets cités dans la description**

- WO 2014128027 A

- WO 201785142 A